# EUROPÄISCHE PATENTANMELDUNG

(11) **EP 4 390 581 A1**
(43) Veröffentlichungstag der Anmeldung: **26.06.2024**
(21) Anmeldenummer: 22215550.9
(22) Anmeldetag: 21.12.2022
(51) Int. Cl.: G05B 19/042, G05B 19/05

(54) **VERFAHREN UND ENGINEERINGSYSTEM ZUR PROJEKTIERUNG UND PROGRAMMIERUNG EINER INDUSTRIELLEN AUTOMATISIERUNGSANORDNUNG MIT EINER ANZAHL AUTOMATISIERUNGSKOMPONENTEN**

(71) Anmelder: Siemens Aktiengesellschaft, 80333 München (DE)
(72) Erfinder: Götz, Jan, 91054 Buckenhof (DE); Reichmann, Jürgen, 81825 München (DE)
(74) Vertreter: Siemens Patent Attorneys

(57) **Zusammenfassung**

Die Erfindung betrifft ein Verfahren und ein Engineeringsystem zur Projektierung und Programmierung einer industriellen Automatisierungsanordnung mit einer Anzahl Automatisierungskomponenten, in einem ersten Schritt durch einen Nutzer Anforderungen an die Automatisierungsanordnung und Informationen über vorhandene Ressourcen vorgegeben werden, dass in einem zweiten Schritt durch ein Engineeringsystem anhand der Anforderungen aus der Hardware-Bibliothek geeignete Hardware-Komponenten (MyIPC, Homel, Home2) als eine Basis für die Automatisierungskomponente jeweils ausgewählt oder vorgeschlagen werden, in einem dritten Schritt durch das Engineeringsystem Typen und Basisparameter für die Kommunikationsbeziehungen vorgeschlagen oder festgelegt werden, nach dem dritten Schritt durch das Engineeringsystem für einige oder jede der Automatisierungskomponente jeweils ein Rahmencode für deren Programmierung bereitgestellt wird, wobei der Rahmencode Kommunikationsprogrammcode und die Basisparameter für den Aufbau und den Betrieb der jeweiligen Kommunikationsbeziehungen umfasst sowie Softwareschnittstellen der Kommunikationsbeziehungen zu dem jeweiligen Applikationsprogrammcode umfasst, dass in einem vierten Schritt der jeweilige Rahmencode mit dem jeweiligen Applikationsprogrammcode für die Anwendungen ergänzt und mit den jeweiligen Softwareschnittstellen verknüpft wird, und in einem fünften Schritt der derart ergänzte Rahmencode als die Software auf die jeweilige Hardware-Komponente (MyIPC, Homel, Home2) übertragen und dort installiert wird. Dadurch wird sichergestellt, dass die von verschiedenen Personen oder Einrichtungen erstellten Anwendungen direkt nach ihrer jeweiligen Installation miteinander kommunizieren können und die Programmierer von der Programmierung und Konfiguration des Datenaustauschs entlastet sind.

## Beschreibung

Die Erfindung betrifft ein Verfahren zur Projektierung und Programmierung einer industriellen Automatisierungsanordnung mit einer Anzahl Automatisierungskomponenten gemäß dem Oberbegriff des Patentanspruchs 1, und ein Engineeringsystem zur Projektierung und Programmierung einer industriellen Automatisierungsanordnung mit einer Anzahl Automatisierungskomponenten gemäß dem Oberbegriff des Patentanspruchs 6.

Industrielle Automatisierungsanordnung bestehen regelmäßig aus einer Mehrzahl von programmierbaren Automatisierungskomponenten, insbesondere speicherprogrammierbare Steuerungen (PLC - Programmable Logic Controller), Bedien- und Beobachtungsgeräte (HMI - Human Machine Interface) und anderen computerbasierten Geräten. Diese Automatisierungskomponenten sind regelmäßig miteinander vernetzt, gehören also einem oder mehreren Netzwerken (Automatisierungsnetze) an und haben somit untereinander Kommunikationsbeziehungen zum Austausch von Sensordaten, Befehlen für Aktoren, Prozessparametern und anderen Daten.

In der Automatisierungstechnik werden üblicherweise sogenannte Engineeringsysteme eingesetzt, die der Planung und der Programmierung der Automatisierungsanordnung und damit der Automatisierungskomponenten dienen. Zum einen werden mithilfe der Engineeringsysteme die Hardware-Komponenten ausgewählt, die die Basis für die Automatisierungskomponente bilden, und zum anderen die Software erstellt auf die Hardware-Komponenten zur Vervollständigung der Automatisierungskomponenten geladen, um letztlich die gewünschte Funktionalität der Automatisierungsanordnung sicherzustellen.

Eine Automatisierungskomponente besteht demgemäß aus einer Hardware-Komponente ("Plattform"), die mit Software (Firmware, Betriebssystem und Anwendungsprogramm / Applikation / Anwendung / Applikationsprogrammcode) versehen ist. Das Anwendungsprogramm / Applikation / Anwendung bzw. der Applikationsprogrammcode umfasst die sog. Business-Logik, also einen Programmteil, der die eigentliche Funktionalität definiert. In der Business-Logik sind insbesondere Eingangsvariablen und Ausgangsvariablen logisch bzw. mittels eines Algorithmus oder dgl. miteinander verschaltet, um eine industrielle Anwendung zu steuern oder regeln. Es kann auf einer Hardware-Komponente auch mehr als eine Anwendung ablaufen, somit stellt die so programmierte Hardware-Komponente dann eine Mehrzahl Automatisierungskomponenten dar.

Mit den gebräuchlichen Engineeringsystemen werden auch die Kommunikationsbeziehungen zwischen den Automatisierungskomponenten geplant. Die Software, die auf die verschiedenen Automatisierungskomponenten geladen wird, wird mithilfe der Engineeringsysteme jeweils derart ausgestaltet, dass die gewünschten Kommunikationsbeziehungen im Betrieb etabliert werden und der gewünschte Datenaustausch stattfinden kann, wobei Variablen (Eingangs- und Ausgangsvariablen) oder andere Datenkonstrukte und -strukturen der Anwendungsprogramme der jeweiligen Automatisierungskomponente mit den Kommunikationsbeziehungen bzw. konkret den Kommunikationskanälen derart verknüpft werden, dass die gewünschten Daten ausgetauscht werden können, beispielsweise mit einem Bedien- und Beobachtungsgerät, mit anderen Steuerungen, mit industriellen Edge-Geräten oder dgl. Jede Automatisierungskomponente wird mit einem eigenen Software-Paket programmiert, welches beispielsweise ein Betriebssystem und zumindest ein ausführbares Anwendungsprogramm (Automatisierungsprogramm) mit der sog. "Business-Logik" umfasst, wobei letztlich die programmierten Automatisierungskomponente ein Softwaresystem bilden, welches verteilt ist auf mehreren Geräten (Hardware, physikalische Schnittstellen, ...), die jeweils unterschiedliche Systemvoraussetzungen (Rechenleistung, verfügbarer Speicher, angeschlossene Geräte, ...) haben können, verschiedene Kommunikationsprotokolle (nur lokal verfügbar, echtzeitfähig, sicher, ...) unterstützen und verschiedene Programmiersprachen (PLC, kompilierte Sprachen, Skriptsprachen) nutzen.

Bei der Konzeption eines neuen umfangreichen Softwareprodukts, also einer Gesamtheit der Software für eine Automatisierungsanordnung mit mehreren Automatisierungskomponenten, wird heutzutage ein Architekturdokument erstellt, aus dem ein Design für die beteiligten Applikationen und die Kommunikationswege für Daten abgeleitet wird. Das Designdokument geht an die verschiedenen Gruppen zur Entwicklung der Einzelapplikationen.

Im ersten Schritt werden die Applikationen (Anwendungen - auch als "Apps", Applikationen oder Applikationsprogrammcode bezeichnet) mit der sog. Business-Logik einzeln entwickelt und erst im Nachgang zusammengeführt und gemeinsam getestet. Probleme - speziell im Bereich der Inter-App-Kommunikation - können erst zu diesem Zeitpunkt erkannt und danach gelöst werden. Es findet ein iterativer Prozess statt, der durch die Verteilung auf unterschiedliche Arbeitsgruppen zu einem erheblichen Zeit- und Arbeitsaufwand führt. Änderungen von Schnittstellen einzelner Gruppen werden typischerweise nicht sofort an andere Gruppen weitergeleitet, da das Architekturdokument häufig nicht mehr aktualisiert wird. Entscheidendes Problem ist, dass Fehler dadurch erst sehr spät im Gesamtprozess auftreten. Bei kleineren Softwareprojekten werden die Kommunikationswege anstelle in einem Architekturdokument auch häufig über Tabellenblätter ("Excel-Listen") oder per E-Mail kommuniziert, wodurch ebenfalls häufig Änderungen zur späteren Zeit von anderen Kollegen nicht mehr berücksichtigt werden.

Ein derart erstelltes Software-System hat oft eine hohe Komplexität, dessen resultierende Probleme also häufig erst im laufenden Betrieb erkannt werden. Die Behebung dieser Probleme ist aufgrund der Komplexität des Gesamtsystems schwierig und zeitaufwendig.

Es ist also eine Aufgabe der vorliegenden Erfindung, die Projektierung und Programmierung von industriellen Automatisierungsanordnung mit einer Mehrzahl von Automatisierungskomponente zu vereinfachen und dabei insbesondere eine Hilfestellung bei der Gestaltung und Nutzung der Schnittstellen und Kommunikationsbeziehungen zwischen den vernetzten Automatisierungskomponente zu geben.

Die Lösung dieser Aufgabe sieht prinzipiell vor, mit Hilfe einer entsprechend ausgebildeten Funktionalität eines Engineeringsystems, nachfolgend auch kurz "Tool" genannt, grundlegende Probleme schon in der Design-Phase des Softwareprojekts zu vermeiden oder zur Zeit des "Deployments", also zum Zeitpunkt der Verteilung (Übertragung auf eine Hardware-Komponente und Installation) der Software (vor allem des Applikationsprogrammcodes), aufzulösen.

Das zu erstellende Softwaresystem, also die Gesamtheit der Anwendungsprogramme (einschließlich der Architektur für die Kommunikation) für die Automatisierungskomponenten, wird dazu mit Hilfe einer grafischen Benutzeroberfläche in all seinen Details beschrieben und daraus entsprechender Softwarecode (vor allem Applikationsprogrammcode) und Konfigurationsdateien für die Ausführung generiert. Der generierte Code enthält dabei die Anweisungen und Konfigurationsdaten für die kompletten Kommunikationsbeziehungen bzw. -verbindungen; der Nutzer muss nur seine sog. Geschäftslogik ("Business Logik") ergänzen. Das jeweils auf den Hardware-Komponenten ebenfalls erforderliche Betriebssystem (Runtime Environment) kann entweder schon auf den Automatisierungskomponenten vorhanden sein, oder zum Zeitpunkt des "Deployments" installiert oder ergänzt werden.

Kern der erfindungsgemäßen Lösung der Aufgabe ist es somit, dass den Entwicklern der Anwendungen ein bereits fertiger sog. Rahmencode automatisch oder zumindest teil-automatisch zur Verfügung gestellt wird, der bereits vorkonfigurierte Kommunikationsfunktionen umfasst, an deren Schnittstellen die Business-Logik der Anwendungen bzw. deren Datenhaushalt (Variablen, Datenstrukturen etc.) ohne weiteres angeknüpft werden kann.

Die Lösung der Aufgabe umfasst insbesondere ein Verfahren gemäß Patentanspruch 1 und ein Engineerings-System nach Patentanspruch 6.

Dabei wird ein Verfahren zur Projektierung und Programmierung einer industriellen Automatisierungsanordnung mit einer Anzahl Automatisierungskomponenten vorgeschlagen, wobei zur Projektierung zumindest eine Hardware-Komponente als Basis für die Automatisierungskomponenten aus einer Hardware-Bibliothek ausgewählt wird, wobei in den Automatisierungskomponenten Kommunikationsbeziehungen zwischen den Automatisierungskomponenten bzw. deren Anwendungen konfiguriert werden, und wobei zur Programmierung die Hardware-Komponenten jeweils mit Software geladen werden. Dabei werden in einem ersten Schritt durch einen Nutzer Anforderungen an die Automatisierungsanordnung und Informationen über vorhandene Ressourcen vorgegeben, in einem zweiten Schritt werden durch ein Engineeringsystem anhand der Anforderungen aus der Hardware-Bibliothek geeignete Hardware-Komponenten als eine Basis für die Automatisierungskomponente jeweils ausgewählt oder vorgeschlagen, in einem dritten Schritt werden durch das Engineeringsystem anhand der vorgeschlagenen Hardware-Komponenten und der Informationen über die Ressourcen Typen und Basisparameter für die Kommunikationsbeziehungen vorgeschlagen oder festgelegt, nach dem dritten Schritt wird durch das Engineeringsystem für einige oder jede der Automatisierungskomponente jeweils ein Rahmencode für deren Programmierung bereitgestellt, wobei der Rahmencode Kommunikationsprogrammcode und die Basisparameter für den Aufbau und den Betrieb der jeweiligen Kommunikationsbeziehungen umfasst sowie Softwareschnittstellen der Kommunikationsbeziehungen zu dem jeweiligen Applikationsprogrammcode umfasst, in einem vierten Schritt wird der jeweilige Rahmencode zur Ergänzung mit dem jeweiligen Applikationsprogrammcode für die Anwendungen zumindest einem Programmierer oder Programmiersystem bereitgestellt, wobei der jeweilige Applikationsprogrammcode mit den jeweiligen Softwareschnittstellen verknüpft wird, und in einem fünften Schritt wird der derart ergänzte Rahmencode als die Software auf die jeweilige Hardware- Komponente übertragen und dort installiert. Dadurch wird sichergestellt, dass die von verschiedenen Personen oder Einrichtungen erstellten Anwendungen direkt nach ihrer jeweiligen Installation miteinander kommunizieren können, alle Anforderungen an das System erfüllt werden, und die Programmierer von der Programmierung und Konfiguration des Datenaustauschs entlastet sind.

Die Aufgabe wird außerdem durch ein Engineeringsystem zur Projektierung und Programmierung einer industriellen Automatisierungsanordnung mit einer Anzahl Automatisierungskomponenten gelöst, wobei zur Projektierung zumindest eine Hardware-Komponente als Basis für die Automatisierungskomponenten aus einer Hardware-Bibliothek ausgewählt wird, wobei in den Automatisierungskomponenten Kommunikationsbeziehungen zwischen den Automatisierungskomponenten und deren Anwendungen konfiguriert werden, und wobei zur Programmierung die Automatisierungskomponenten jeweils mit Software geladen werden. Dabei ist das Engineeringsystem dazu eingerichtet, in einem ersten Schritt, von einem Nutzer Anforderungen an die Automatisierungsanordnung und Informationen über vorhandene Ressourcen entgegen zu nehmen, in einem zweiten Schritt anhand der Anforderungen aus der Hardware-Bibliothek geeignete Hardware-Komponenten als eine Basis für die Automatisierungskomponente jeweils auszuwählen oder vorzuschlagen, in einem dritten Schritt anhand der vorgeschlagenen Hardware-Komponenten und der Informationen über die Ressourcen Typen und Basisparameter für die Kommunikationsbeziehungen vorzuschlagen oder festzulegen, nach dem dritten Schritt für einige oder jede der Automatisierungskomponenten jeweils einen Rahmencode für deren Programmierung bereitzustellen, wobei der Rahmencode Kommunikationsprogrammcode und die Basisparameter für den Aufbau und den Betrieb der jeweiligen Kommunikationsbeziehungen umfasst sowie Softwareschnittstellen der Kommunikationsbeziehungen zu dem jeweiligen Applikationsprogrammcode umfasst, in einem vierten Schritt den jeweiligen Rahmencode zur Ergänzung mit dem jeweiligen Applikationsprogrammcode für die Anwendungen zumindest einem Programmierer oder Programmiersystem bereitzustellen, wobei vorgesehen ist, dass der jeweilige Applikationsprogrammcode mit den jeweiligen Softwareschnittstellen verknüpft wird, und in einem fünften Schritt den derart ergänzten Rahmen-code als die Software zur Installation auf die jeweilige Hardware-Komponente zu übertragen. Damit können die bereits für das Verfahren diskutierten Vorteile erzielt werden.

Vorteilhafte Ausgestaltungen der Erfindung sind in den abhängigen Patentansprüchen angegeben, deren Merkmale einzeln oder in sinnvoller Kombination miteinander angewendet werden können. Vorteilhafte Ausgestaltungen des Verfahrens gelten sinngemäß auch für die Vorrichtung, und umgekehrt.

Vorteilhaft wird in dem fünften Schritt eine Konfigurationsdatei mit spezifischen Anweisungen für die Installation erzeugt und mit dem ergänzten Rahmencode zu der jeweiligen Hardware-Komponente übertragen. Dadurch kann die Automatisierungskomponente vollautomatisch auf den Betrieb vorbereitet werden und beispielsweise der Ablauf der Installation des Programmcodes mittels Scripts, Batch oder anderer Mittel gesteuert werden.

Die spezifischen Anweisungen können die Konfiguration der Hardware-Komponente betreffen, wobei im Zuge der Installation die Hardware-Komponente entsprechend der Anweisungen konfiguriert wird. Beispielsweise können Schnittstellen konfiguriert werden, Sicherheitseinstellungen können geändert werden, Treiber können installiert werden, oder dgl.

Die Anweisungen können vorteilhaft die Durchführung der Installation, dabei insbesondere eine Reihenfolge der Installation verschiedener Module des ergänzten Rahmencodes, betreffen, wobei die Installation entsprechend der Anweisungen durchgeführt wird.

Die Konfigurationsdatei kann zudem Bezeichnungen und Quellenangaben über zu installierende dritte Software-Komponenten umfassen, wobei im Zuge der Installation diese dritten Software-Komponenten aus den angegebenen Quellen geladen und installiert werden. Das können DLLs, Debugging-Routinen, Virenschutzprogramme, Dienstprogramme oder andere Software-Komponenten sein.

Ein Ausführungsbeispiel des erfindungsgemäßen Verfahrens wird nachfolgend anhand der Zeichnungen erläutert. Es dient gleichzeitig der Erläuterung eines erfindungsgemäßen Engineeringsystems.

Dabei zeigen:
- Figur 1: ein Beispiel für ein System auf einem Hardware-Komponente (Hardwareknoten) mit Nutzung unterschiedlicher Programmiersprachen und eines Kommunikationsprotokolls, und
- Figur 2: ein Beispiel für ein auf zwei Hardware-Komponenten (-knoten) verteiltes System mit Nutzung unterschiedlicher Kommunikationsprotokolle.

Die Erfindung bezieht sich auf ein hier im Weiteren "TOOL" (auch RIBEye Tool genannt; RIB = Realtime Information Backbone) genanntes Werkzeug bzw. Funktionsmodul, welches in einem Engineeringsystem für industrielle Automatisierungslösungen (z.B. TIA-Portal des Herstellers Siemens) integriert sein kann und das zur Entwickelung eines Gesamtsystems aus mehreren Nutzerapplikationen und zugehörigen Kommunikationsverfahren dient. In einer alternativen Variante kann das "TOOL" auch extern vom Engineeringsystem angeordnet sein, mit diesem aber vorteilhafter Weise kommunikativ verbunden sein, so dass das TOOL auf die Engineeringdaten (auch "Projektdaten" genannt) zugreifen kann. Unabhängig von der konkreten Architektur und ohne Einschränkungen soll der Einfachheit im Folgenden definiert sein, dass das TOOL zumindest funktionaler Bestandteil des Engineeringsystems im weiteren Sinne sein soll.

Das TOOL dient in der Designphase zur Erstellung von für das Gesamtsystem konsistenten Anforderungen, aus denen in der Generierungsphase der komplette Coderahmen für die Nutzerapplikationen einschließlich der benötigten Kommunikationsverbindungen und ein sogenanntes Deployment-Dokument erzeugt wird. Das Deployment-Dokument enthält dann die Anforderungen an die notwendige Zielhardware und das vorhandene Netzwerk und wird zum Zeitpunkt der Ausführung zur Auswahl der passenden Hardware-Komponenten (kurz: Hardware) oder zur Konfiguration der Hardware und Netzwerk-Eigenschaften genutzt. Die Auswahl der passenden Programmiersprache und des passenden Kommunikationsprotokolls erfolgt aufgrund der vorhandenen Anforderungen (z.B. geforderte Übertragungsgeschwindigkeiten, Latenzzeiten, Zykluszeiten) und Informationen über die Ressourcen:
- verfügbare Hardware,
- physikalische Schnittstellen,
- Rechenleistung,
- verfügbarer Speicher,
- Ablaufumgebungen (Betriebssysteme, Virtualisierungslösungen etc.),
- usw.

Die Ressourcen und damit deren Leistungsparameter können entweder vorher definiert oder aus einem bestehenden System ermittelt werden. Bestimmte Anforderungen können ggf. durch unterschiedliche Kombinationen von Programmiersprachen und Kommunikationsprotokollen erfüllt werden. Hier hat der TOOL-Nutzer die Möglichkeit zwischen diesen unterschiedlichen Kombinationen zu wählen (beispielsweise spielen hier auch die verfügbaren Entwicklerressourcen eine Rolle), das TOOL behält dabei aber immer das Gesamtsystem im Auge, d.h. der TOOL-Nutzer kann kein Gesamtsystem designen, das den vorhandenen Anforderungen oder Ressourcen widerspricht. Vorteilhaft greift das TOOL auf Bibliotheksinformationen mit Leistungsparametern zu, die auch experimentell für verschiedene Anwendungsfälle und verschiedene Ressourcen gewonnen sein können.

Obwohl in vielen realen Anwendungen und auch im vorliegenden Ausführungsbeispiel zumeist eine Mehrzahl von Hardware-Komponenten mit jeweils einer Anwendung programmiert werden, können in anderen Ausführungsbeispielen auch mehrere Anwendungen auf ein- und derselben Hardware-Komponente installiert werden und ablaufen, wobei auch in einem solchen Fall Kommunikationsbeziehungen und Kommunikationsverbindungen zwischen den Anwendungen programmiert und konfiguriert werden müssen. Mit anderen Worten: im vorliegenden Kontext werden gleichermaßen Kommunikationsverbindungen bzw. Kommunikationsbeziehungen zwischen verschiedenen Hardware-Komponenten bzw. den darauf ablaufenden Anwendungen und Applikationen betrachtet, als auch die Inter-Prozesskommunikation zwischen Anwendungen auf einer gemeinsamen Hardware-Plattform. Beispielsweise sind industrielle EDGE-Geräte bekannt, auf denen eine Vielzahl von Software-Containern (z.B. in mehreren sog. Docker-Laufzeitumgebungen) mit unterschiedlichen Programmen und Lösungen parallel installiert sind und ablaufen, die jeweils voneinander isoliert sind (beispielsweise mittel Virtualisierungslösungen in verschiedenen Laufzeitumgebungen), aber einen Datenbus der unterlagerten Hardware-Komponente zur Kommunikation benutzen. Auch Verbindungen über einen solchen Datenbus oder virtuelle Netzwerkschnittstellen oder dergleichen innerhalb der Hardware-Plattform können Gegenstand des nachfolgend beschriebenen Verfahrens sein.

Ist das Design des Gesamtsystems fertig, wird daraus der Rahmencode für die einzelnen Applikationen (Applikation inklusive Kommunikationsanbindung) generiert sowie Anweisungen und Konfigurationen (z.B. Laufzeitanforderungen) für das spätere Deployment, also die Verteilung und Installation in der Automatisierungsanordnung mit der zumindest einen Hardware-Komponente. Dieser Rahmencode wird an die Entwickler (Applikationsentwickler) der Einzelapplikationen gegeben und von diesen dann um die sog. Business Logik, also das eigentliche eine industrielle Anwendung steuernde Automatisierungsprogramm, ergänzt. Somit ist die Software für die Automatisierungskomponente(n) fertiggestellt, wobei davon ausgegangen wird, dass die Hardware-Komponenten bereits mit Firmware und Betriebssystem ausgestattet sind. Letztere können jedoch auch, gesteuert durch die Konfigurationsdatei, erst zum Zeitpunkt des "Deployments" der Software nachgeladen und installiert werden; gleiches gilt auch für andere Software-Bestandteile, beispielsweise Treiber, Anti-Virenprogramme, Debugging-Software und dgl.

Der nach der Verteilung regelmäßig nicht mehr veränderbare Rahmencode enthält neben dem Code für alle Kommunikationsbeziehungen Softwareschnittstellen (sog. "getters" und "setters" für Eingangs- und Ausgangsdaten) für alle im Design festgelegten Kommunikationsvariablen. Durch die Zusammenlegung des Codes mit den Kommunikationsaspekten und der Konfigurationsdatei für das Deployment wird die konsistente Gesamtfunktionalität sichergestellt. Der Rahmencode umfasst vorteilhaft bereits die für die Kommunikationsbeziehungen bzw. -verbindungen benötigten Adressen; alternativ können diese auch in der Konfigurationsdatei enthalten und damit später leicht änderbar oder ergänzbar sein.

Ein Applikationsentwickler fügt in bestimmten Bereichen des generierten Rahmencodes - den sog. User Sections - seine Ablauflogik hinzu. Erfolgt später - beispielsweise aufgrund von Designänderungen des Gesamtsystems - eine Neugenerierung des Rahmencodes bleibt die User Sections unverändert.

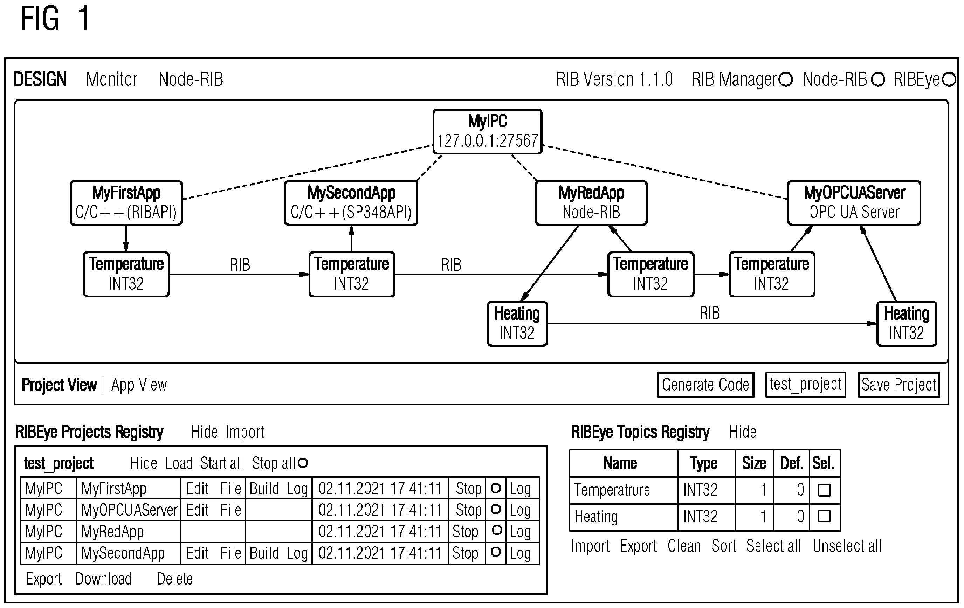

Die Figur 1 zeigt ein Beispiel für eine Projektierungsansicht in einem Engineeringsystem für eine industrielle Automatisierungsanordnung auf einer einzelnen, gemeinsamen Hardware-Komponente mit Nutzung unterschiedlicher Programmiersprachen und eines Kommunikationsprotokolls; der hier gezeigte Anwendungsfall betrachtet also Kommunikationsbeziehungen zwischen Anwendungen, die auf ein- und derselben Hardware-Komponente MyIPC ("Mein industrieller PC") instanziiert sind. Die Engineering-Projekte zu den Anwendungen sind in der Tabelle RIBeye Projects Registry registriert.

In einem Ausführungsbeispiel soll für jede der Anwendungen auf der Hardware-Komponente MyIPC eine Container-Laufzeit Umgebung instanziiert werden. Ziel ist es, für die jeweiligen Entwickler der jeweiligen Anwendungen einen sogenannten Rahmencode zur Verfügung zu stellen, der auf die Laufzeit-Umgebung des jeweiligen Containers zugreift und der insbesondere hinsichtlich der Kommunikation so weit vorprogrammiert ist, dass auszutauschende Datenstrukturen oder -objekte einer sogenannten Business-Logik, hier auch Applikationsprogrammcode genannt, der jeweils von dem Entwickler ergänzt werden soll, direkt mittels Softwareschnittstellen zur Verfügung stehen.

Die Anwendungen MyFirstApp, MySecondApp, MyRedApp und MyOPCU-AServer kommunizieren über einen gemeinsamen Datenbus RIB (Realtime Information Backbone). Gemäß der Projektierung wird durch die Anwendung MyFirstApp eine Datenstruktur, ein sogenanntes "Topic", mit der Bezeichnung Temperature zur Verfügung gestellt, die von den anderen Anwendungen "konsumiert" wird. Gleichermaßen stellt die Anwendung MyRedApp einen Sensorwert Heating zur Verfügung, die durch die Anwendung MyOP-CUAServer gelesen wird. Die genannten Datenobjekte/strukturen (hier: Variablen) sind in der Tabelle RIBeye Topics Registry definiert.

Nach Abschluss dieser Projektierung erstellt das Engineeringsystem für jede der Anwendungen den bereits erwähnten Rahmen Code, der die genannten Anwendungen (Applikationsprogrammcode) und die Konfigurationen für den Austausch der Datenobjekte Temperature, Heating über den Datenbus RIB umfasst, sodass der zu ergänzende Applikationsprogrammcode in jeder der Anwendungen direkt auf Objekte oder Variablen mit den Bezeichnungen Temperature bzw. Heating zugreifen kann. Zudem erstellt das Engineeringsystem spätestens nach Rücklieferung des ergänzten Rahmencodes der einzelnen Entwickler für jede Hardware-Komponente (in diesem Ausführungsbeispiel ist es ja nur eine mit dem Namen MyIPC) ein Deployment-Dokument mit den vier Softwarepaketen und einer Konfigurationsdatei, welches an eine Betriebslogik der Hardware-Komponente MyIPC übermittelt und dort ausgeführt wird. Dabei werden unter anderem auf dem Datenbus RIB die erforderlichen Ports oder Kanäle ("Kommunikationsbeziehungen") bereitgestellt und konfiguriert, die vier Anwendungen werden in einer jeweiligen Ausführungsumgebung (z.B. Container-Runtime-Environment, virtuelle Maschine oder dgl.) installiert und an den Datenbus RIB bzw. die etablierten Kommunikationskanäle oder -beziehungen angebunden.

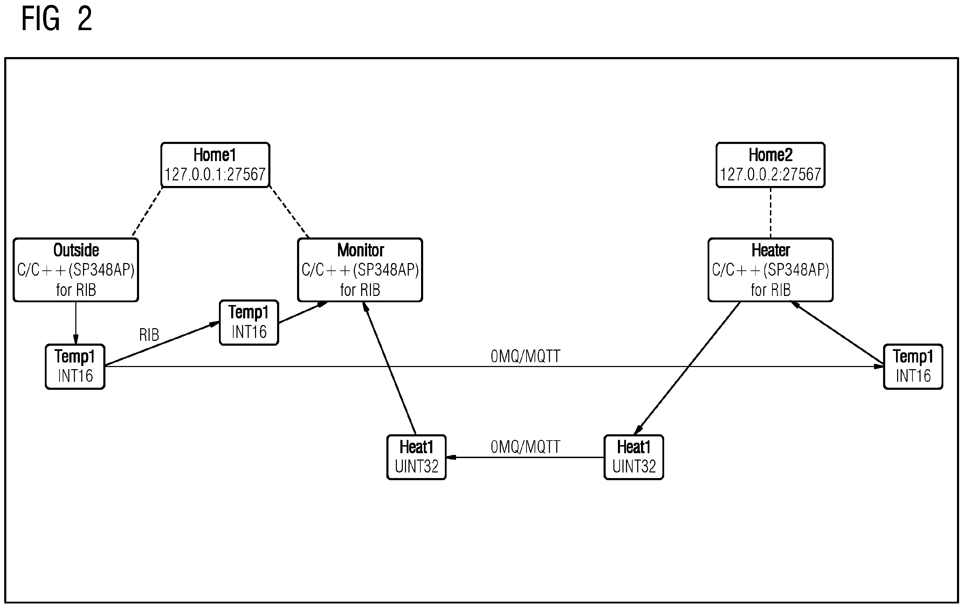

Die Figur 2 zeigt ein Beispiel für ein auf zwei Hardwareknoten Homel, Home2 verteiltes System mit Nutzung unterschiedlicher Kommunikationsprotokolle RIB, 0MQ/MQTT. In diesem Beispiel müssen zwei Deployment-Pakete erzeugt werden, wobei in jedem der Deployment-Pakete für die Hardware-Komponenten Home1, Home2 Kommunikationskanäle für den Austausch der Variablen Temp1, Heat1 berücksichtigt werden. Auch hier stehen diese Variablen mittels einer Softwareschnittstelle, z.B. in Form bereits definierter Systemvariablen oder in Form eines API, dem Applikationsprogrammcode zugreifbar zur Verfügung, so dass ein Entwickler in seiner Business-Logik mit diesen Variablen direkt arbeiten kann, ohne sich um die Programmierung und Konfigurierung und Adressierung der Kommunikation kümmern zu müssen.

Durch das genannte Verfahren und ein der gemäß ausgestattetes Engineeringsystem können folgende Vorteile erreicht werden:
- Anforderungen an das Zielsystem können durch das Zusammennehmen von Applikationsanforderungen, Programmiersprache und Kommunikationsanforderungen besser abgeschätzt werden und zur Zeit der Ausführung überprüft werden.
- Es wird sichergestellt, dass die erzeugten Softwareartefakte auf eine passende Hardware deployed (übertragen, geladen) werden oder die Hardware und das Netzwerk zur Ausführung passend konfiguriert werden.
- Durch das skizzierte TOOL, also die beschriebene Funktionalität eines Engineeringsystems, erhöht sich die Wahrscheinlichkeit, dass das Gesamtsystem gut miteinander arbeitet und die angedachte Aufgabe ausführen kann.
- Wenn es bestehende Applikationen auf einer laufenden Hardware gibt, kann das TOOL die Kommunikationsbeziehungen und die Eigenschaften der Hardware auslesen und für eine weitere Modellierung der Anforderungen verwenden.
- Die Aufteilung der SW-Komponenten auf die verfügbaren Hardware-Komponenten kann auch später auf Grund der Anforderungen durch das "RIBEye"-TOOL vorgenommen werden und muss nicht von Anfang an auf ein bestimmtes Gerät festgelegt werden. Bei einer Änderung der Hardware-Architektur oder der Anforderungen ("constraints") kann auch eine neue Deployment-Konfiguration berechnet und eine entsprechende Neukonfiguration der Automatisierungsanordnung erfolgen.

## Patentansprüche

1. Verfahren zur Projektierung und Programmierung einer industriellen Automatisierungsanordnung mit einer Anzahl Automatisierungskomponenten,
wobei zur Projektierung Hardware-Komponenten (MyIPC, Home1, Home2) als Basis für die Automatisierungskomponenten aus einer Hardware-Bibliothek ausgewählt werden,
wobei in den Automatisierungskomponenten Kommunikationsbeziehungen zwischen Anwendungen der Automatisierungskomponenten konfiguriert werden, und
wobei zur Programmierung die Automatisierungskomponenten jeweils mit Software geladen werden,
**dadurch gekennzeichnet,**
**dass** in einem ersten Schritt durch einen Nutzer Anforderungen an die Automatisierungsanordnung und Informationen über vorhandene Ressourcen vorgegeben werden,
**dass** in einem zweiten Schritt durch ein Engineeringsystem anhand der Anforderungen aus der Hardware-Bibliothek zumindest eine geeignete Hardware-Komponente (MyIPC, Home1, Home2) als die Basis für die Automatisierungskomponenten jeweils ausgewählt oder vorgeschlagen wird,
**dass** in einem dritten Schritt durch das Engineeringsystem anhand der vorgeschlagenen Hardware-Komponenten (MyIPC, Homel, Home2) und der Informationen über die Ressourcen Typen und Basisparameter für die Kommunikationsbeziehungen vorgeschlagen oder festgelegt werden,
**dass** nach dem dritten Schritt durch das Engineeringsystem für einige oder jede der Automatisierungskomponente jeweils ein Rahmencode für deren Programmierung bereitgestellt wird, wobei der Rahmencode Kommunikationsprogrammcode und die Basisparameter für den Aufbau und den Betrieb der jeweiligen Kommunikationsbeziehungen umfasst sowie Softwareschnittstellen der Kommunikationsbeziehungen zu dem jeweiligen Applikationsprogrammcode umfasst, dass in einem vierten Schritt der jeweilige Rahmencode zur Ergänzung mit dem jeweiligen Applikationsprogrammcode für die Anwendungen zumindest einem Programmierer oder Programmiersystem bereitgestellt wird, wobei der jeweilige Applikationsprogrammcode mit den jeweiligen Softwareschnittstellen verknüpft wird, und
**dass** in einem fünften Schritt der derart ergänzte Rahmencode als die Software auf die jeweilige Hardware-Komponente (MyIPC, Homel, Home2) übertragen und dort installiert wird.

2. Verfahren nach Patentanspruch 1,
**dadurch gekennzeichnet,**
**dass** in dem fünften Schritt eine Konfigurationsdatei mit spezifischen Anweisungen für die Installation erzeugt und mit dem ergänzten Rahmencode zu der jeweiligen Hardware-Komponente (MyIPC, Homel, Home2) übertragen wird.

3. Verfahren nach Patentanspruch 2,
**dadurch gekennzeichnet,**
**dass** die spezifischen Anweisungen die Konfiguration der Hardware-Komponente (MyIPC, Homel, Home2) betreffen, wobei im Zuge der Installation die Hardware-Komponente (MyIPC, Homel, Home2) entsprechend der Anweisungen konfiguriert wird.

4. Verfahren nach Patentanspruch 2 oder 3,
**dadurch gekennzeichnet,**
**dass** die Anweisungen die Durchführung der Installation, insbesondere eine Reihenfolge der Installation verschiedener Module des ergänzten Rahmencodes, betreffen, wobei die Installation entsprechend der Anweisungen durchgeführt wird.

5. Verfahren nach einem der Patentansprüche 2 bis 4,
**dadurch gekennzeichnet,**
**dass** die Konfigurationsdatei Bezeichnungen und Quellenangaben über zu installierende dritte Software-Komponenten umfasst, wobei im Zuge der Installation diese dritten Software-Komponenten aus den angegebenen Quellen geladen und installiert werden.

6. Engineeringsystem zur Projektierung und Programmierung einer industriellen Automatisierungsanordnung mit einer Anzahl Automatisierungskomponenten,
wobei zur Projektierung zumindest eine Hardware-Komponente (MyIPC, Homel, Home2) für die Automatisierungskomponenten aus einer Hardware-Bibliothek ausgewählt werden,
wobei in den Automatisierungskomponenten Kommunikationsbeziehungen zwischen Anwendungen der Automatisierungskomponenten konfiguriert werden, und
wobei zur Programmierung die Automatisierungskomponenten jeweils mit Software geladen werden,
**dadurch gekennzeichnet,**
**dass** das Engineeringsystem dazu eingerichtet ist,
in einem ersten Schritt, von einem Nutzer, von Anforderungen an die Automatisierungsanordnung und Informationen über vorhandene Ressourcen entgegen zu nehmen,
in einem zweiten Schritt anhand der Anforderungen aus der Hardware-Bibliothek geeignete Hardware-Komponenten (MyIPC, Homel, Home2) als eine Basis für die Automatisierungskomponente jeweils auszuwählen oder vorzuschlagen,
in einem dritten Schritt anhand der vorgeschlagenen Hardware-Komponenten und der Informationen über die Ressourcen Typen und Basisparameter für die Kommunikationsbeziehungen vorzuschlagen oder festzulegen,
nach dem dritten Schritt für einige oder jede der Automatisierungskomponente jeweils einen Rahmencode für deren Programmierung bereitzustellen, wobei der Rahmencode Kommunikationsprogrammcode und die Basisparameter für den Aufbau und den Betrieb der jeweiligen Kommunikationsbeziehungen umfasst sowie Softwareschnittstellen der Kommunikationsbeziehungen zu dem jeweiligen Applikationsprogrammcode umfasst,
in einem vierten Schritt den jeweiligen Rahmencode zur Ergänzung mit dem jeweiligen Applikationsprogrammcode für die Anwendungen zumindest einem Programmierer oder Programmiersystem bereitzustellen, wobei vorgesehen ist, dass der jeweilige Applikationsprogrammcode mit den jeweiligen Softwareschnittstellen verknüpft wird, und in einem fünften Schritt den derart ergänzten Rahmencode als die Software zur Installation auf die jeweilige Hardware-Komponente (MyIPC, Homel, Home2) zu übertragen.

7. Engineeringsystem nach Patentanspruch 6,
**dadurch gekennzeichnet,**
**dass** das Engineeringsystem dazu eingerichtet ist,
in dem fünften Schritt eine Konfigurationsdatei mit spezifischen Anweisungen für die Installation zu erzeugen und mit dem ergänzten Rahmencode zu der jeweiligen Hardware-Komponente zu übertragen.

8. Engineeringsystem nach Patentanspruch 7,
**dadurch gekennzeichnet,**
**dass** die spezifischen Anweisungen die Konfiguration der Hardware-Komponente betreffen, wobei vorgesehen ist, dass im Zuge der Installation die Hardware-Komponente (MyIPC, Homel, Home2) entsprechend der Anweisungen konfiguriert wird.

9. Engineeringsystem nach Patentanspruch 7 oder 8,
**dadurch gekennzeichnet,**
**dass** die Anweisungen die Durchführung der Installation, insbesondere eine Reihenfolge der Installation verschiedener Module des ergänzten Rahmencodes, betreffen, wobei vorgesehen ist, dass die Installation entsprechend der Anweisungen durchgeführt wird.

10. Engineeringsystem nach einem der Patentansprüche 7 bis 9, **dadurch gekennzeichnet,**
**dass** die Konfigurationsdatei Bezeichnungen und Quellenangaben über zu installierende dritte Software-Komponenten umfasst, wobei vorgesehen ist, dass im Zuge der Installation diese dritten Software-Komponenten aus den angegebenen Quellen geladen und installiert werden.
